Europäisches Patentamt

European Patent Office

Office européen des brevets

(19)

(11) Publication number: **0 392 798**
**A2**

# (12) EUROPEAN PATENT APPLICATION

(21) Application number: **90303834.7**

(22) Date of filing: **10.04.90**

(51) Int. Cl.5: **A23L 1/308, A23D 7/00**

---

(30) Priority: **11.04.89 US 336821**

(43) Date of publication of application:
**17.10.90 Bulletin 90/42**

(84) Designated Contracting States:
**AT BE CH DE DK ES FR GB GR IT LI LU NL SE**

(71) Applicant: **NABISCO BRANDS, INC.**
**200 Deforest Avenue**
**East Hanover NJ 07936-1944(US)**

(72) Inventor: **Klemann, Lawrence P.**
**196 Tanglewood Drive**
**Somerville, New Jersey 08876(US)**
Inventor: **Finley, John W.**
**3 Old Stone Lane**
**Whippany, New Jersey 07981(US)**

(74) Representative: **Thomas, Roger Tamlyn et al**
**D. Young & Co. 10 Staple Inn**
**London WC1V 7RD(GB)**

---

(54) **Partially digestible sucrose esters as low calorie fat mimetics.**

(57) Mixtures of partially digestible sucrose fatty acid esters comprise an improved class of physiologically compatible fat replacements for foods and pharmaceuticals.

EP 0 392 798 A2

# PARTIALLY DIGESTIBLE SUCROSE ESTERS AS LOW CALORIE FAT MIMETICS

## BACKGROUND OF THE INVENTION

This invention relates to the use of mixtures of sucrose fatty acid esters as partially digestible, physiologically compatible edible fat replacements.

Sucrose acetates were the first fatty acid esters of sucrose to be prepared commercially. The octaacetate is bitter, but nontoxic, and it was used to denature alcohol (Markley, K.S., *Fatty Acids*, part 2, Krieger Pub. Co., Malabar, Fla., 1983, pages 848-849). When found to be useful as nonionic surfactants, the lower sucrose esters of longer chain aliphatic acids, notably mono and diesters, received wide application in the food and pharmaceutical industries (Osipow, L., *et al.*, 48 *Ind. Eng. Chem.* 1459 (1956) and Chung, H., *et al.*, 58 *Cereal Chem.* 164 (1981)).

The lower fatty acid esters of sucrose used as emulsifiers readily hydrolyze on digestion in mammals to form normal food components, and are, in fact, also used as animal feed (Bobichon, L., in Hickson, J.L., ed., *Sucrochemistry*, A.C.S., 1977, 115-120). It was subsequently reported that sucrose, like pentaerythritol, *infra*, and structurally related polyols which had more than four esterified hydroxyl groups were not absorbed or digested (Mattson, F.H., and Nolen, G.A., 102 *J. Nutrition* 1171 (1972); Mattson, F.H., and Volpenhein, R.A., 102 *J. Nutrition* 1177 (1972)). Called "sucrose polyesters", the nondigestible sucrose hexa-, hepta-, and octa- esters have many of the physical properties of ordinary triglyceride fat. Hence, they were suggested as low calorie replacements of edible fats and oils in food compositions (U.S. Pat. Nos. 3,600,186, 4,446,165, and 4,461,782).

Sucrose polyester is one of many substances suggested as a potential edible fat replacement (for recent reviews, see Hamm, D.J., 49 *J. Food Sci.* 419 (1984) Haumann, B.J., 63 *J. Amer. Oil Chem. Soc.* 278 (1986) and La Barge, R.G., 42 *Food Tech.* 84 (1988)). Many foods which provide gustatory satisfaction contain significant fat levels, yet fats provide nine calories per gram compared to four calories per gram provided by protein and carbohydrates. Dietary fats represent approximately 40 to 45% of U.S. daily caloric intake, significantly more than England, which has the same daily food consumption, and more than U.S. consumption in 1936 (Merten, H.L., 18 *J. Agr. Food Chem.* 1002 (1970)). A large number of national advisory committes on nutrition have made recommendations differing in detail, but the common theme is a reduction in the total amount of fat in the diet for medical and health reasons, even for individuals who do not desire or require a caloric reduction (Gottenbos, J.J., chapter 8 in Beare-Rogers, J., ed., *Dietary Fat Requirements in Health and Development*, A.O.C.S. 1988, page 109). Hence, major research efforts have focused on ways to produce food substances that provide the same functional and organoleptic properties as fats, but not the calories.

One of the main problems in attempting to formulate fat-like compounds that have decreased absorbability and thus low caloric properties is to maintain the desirable and conventional physical properties of edible fat. Thus, to be a practical low calorie fat, a compound must mimic conventional triglyceride fat by affording the same utility in various fat-containing food compositions such as shortening, margarine, cake mixes, and the like, and be useful in frying or baking.

A major strategy for developing low calorie replacement fats has been to structurally re-engineer natural triglycerides in such a way as to retain their conventional functional properties in foods, while removing their susceptibility toward hydrolysis or subsequent absorption during digestion. To this end, the the fatty acids attached to glycerol have been replaced with alternative acids (U.S. Pat. No. 3,579,548 to Whyte); groups have been inserted between the fatty acids and the glycerol backbone ("propoxylated glycerols", Eur. Pat. Ap. No. 254,547 to White and Pollard); the ester linkages have been replaced by ether linkages (U.S. Pat. No. 3,818,089 to Bayley and Carlson, and Can. Pat. No. 1,106,681 to Trost); the ester linkages have been reversed (U.S. Pat. No. 4,508,746 to Hamm); and the glycerol moeity has been replaced with an alternative alcohol (e.g., ethylene glycol in U.S. Pat. No. 2,924,528 to Barskey et al., and U.S. Pat. No. 2,993,063 to Alsop and Carr).

A second major approach to the development of a low calorie fat replacement has been to explore or synthesize nonabsorbable polymeric materials structurally unlike triglycerides, but having physical properties similar to edible fat. Mineral oil was disclosed as early as 1894 (U.S. Pat. No. 519,980 to Winter), and, more recently, polydextrose (U.S. Pat. No. 4,631,196 to Zeller), polyglucose and polymaltose (U.S. Pat. No. 3,876,794 to Rennhard), polysiloxane (Eur. Pat. Ap. No. 205,273 to Frye), jojoba wax (W. Ger. Pat. No. 3,529,564 to Anika), and polyethylene polymers (E. Ger. Pat. No. 207,070 to Mieth, *et al.*) have been suggested.

A third major strategy combines the first two. Rather than restructure triglyceride molecules or find a substitute structurally very dissimilar, this approach explores the use of various polyol esters, compounds which have numbers of fatty acid groups in excess of the three in conventional fat triglycerides, as nonabsorbable fat replacements. Fully esterified sugar alcohols were suggested as fat replacements during World War I (notably mannitol, Lapworth, A., and Pearson, L.K., and Halliburton, W.D., *et al.*, 13 *J. Biol. Chem.* 296 and 301 (1919)). In 1960, Minich suggested the tetraesters of pentaerythritol, a tetrahydric neopentyl sugar alcohol formed when pentaerythrose condensed from acetaldehyde and formaldehyde undergoes a crossed Cannizzaro reaction, in U.S. Pat. No. 2,962,419, and the Southern and Western Regional Research Laboratories of the U.S.D.A. investigated the feasibility of using amylose esters as new-type fats during the 1960's (see Booth, A.N., and Gros, A.T., 40 *J. Amer. Oil Chem. Soc.* 551 (1963) and the references cited therein). Sucrose polyesters have, as has been discussed, more recently been added to this group. The caloric availability and digestibility of a series of dimeric and polymeric glycerides including diglyceride esters of succinic, fumaric, and adipic acids, and polymeric fats from stearic, oleic and short-chain dibasic acids were assessed by the U.S.D.A. cited *supra,* and polyglycerol esters have since been suggested (U.S. Pat. No. 3,637,774 to Babayan and Lehman).

Nondigestible or nonabsorbable triglyceride analogues, polyol esters, and polymeric materials have proved disappointing as fat replacements when tested in feeding trials, where gastrointestinal side effects occurred, in some cases so extreme that frank anal leakage was observed (discussed in the Hamm and Haumann reviews cited *supra*). Nondigestible fats act as a laxative and are expelled from the body, eliciting foreign body reactions like those early documented for mineral oil (Stryker, W.A., 31 *Arch. Path.* 670 (1941), more recently summarized in Goodman and Gilman's *Pharmacological Basis of Therapeutics,* 7th ed., Macmillan Pub. Co., N.Y., 1985, pages 1002-1003). Polyglycerol and polyglycerol esters, for example, suggested as fat replacements *supra,* have been suggested for use as fecal softening agents as well (U.S. Pat. No. 3,495,010 to Fossel). A number of remedies have been recommended to combat the anal leakage observed when sucrose polyesters are ingested (e.g., employing hardened fats or cocoa butters, U.S. Pat. No. 4,005,195 to Jandacek, or incorporating saturated fatty groups, Eur. Pat. Ap. No. 233,856 to Bernhardt), and dietary fiber preparations have been incorporated into polysaccharide and/or polyol-containing foodstuffs to help inhibit the diarrheal effect (U.S. Pat. No. 4,304,768 to Staub *et al.*).

Thus, none of the prior attempts has been successful to the degree that commercial products employing them have either been approved for safety or achieved general public acceptance in their featured role. A better solution would employ chemistry more compatible with the human digestive process, while providing a significant decrease in caloric density *vis-a-vis* glyceride fats.

## SUMMARY OF THE INVENTION

Ways were accordingly sought of providing an edible fat mimetic more compatible with normal digestion, more particularly, a partially digestible sucrose ester formulation which interferes less with fat metabolism than sucrose polyesters, thus avoiding undesirable anal leakage and other laxative side effects. As described below, a preferred feature of the present invention is the provision of a partially digestible sucrose ester formulation which may, if desired, be engineered to provide essential or desirable fatty acids.

It has now been found that a partially digestible blend of sucrose fatty acid esters, that is, mixtures of sucrose fatty acid esters esterified to various degrees, comprises an improved class of edible fat mimetics. The esters are employed in any edible material or any food preparation process where a fat or oil (e.g. triglyceride fat) is normally employed, in total or partial replacement. By judicious selection of the number, configuration, and variety of fatty acid residues, it is possible to achieve a target reduction in calories while preferably achieving the maximum advantage from the combination of the properties of these mimetics.

## DETAILED DESCRIPTION OF PREFERRED EMBODIMENTS

The following description relates to an improved class of fat mimetic compounds and their incorporation into any food composition or use in conjunction with any edible material. The term "edible material" is broad and includes anything edible, whether or not intended for nutrition, e.g., it can be an additive such as an antioxidant for fats or oils, an antispatter agent, an emulsifier, a texture modifier such as a plasticizer for chewing gum, or other minor functional ingredient such as a carrier or diluent for use in flavorings, pharmaceuticals, and the like. Thus, chewing gum, flavored coatings, oils and fats intended only for frying, and the like are included. In these, all or a portion of the usual fat is replaced by compounds of the invention.

Representative of edible materials which can contain the sucrose esters of this invention in full or partial replacement of natural fat are: frozen deserts, eg., sherbet, ice cream, ices, or milk shakes; puddings and pie fillings; margarine substitutes or blends, flavored bread or biscuit spreads; mayonnaise; salad dressing, both emulsified and non-emulsified; filled dairy products such as filled cream or filled milk; dairy or non-dairy cheese spreads; coffee lighteners, liquid and dried; flavored dips; frying fats and oils; reformed and comminuted meats; meat substitutes or extenders; whipped toppings; compound coatings; frostings and fillings; cocoa butter replacements or blends; candy, especially fatty candies such as containing peanut butter or chocolate; chewing gum; bakery products, e.g., cakes, breads, rolls, pastries, cookies, biscuits, savory crackers; mixes or ingredient premixes for any of these; as well as flavor, nutrient, drug or functional additive delivery systems.

The compounds of this invention comprise partially digestible mixtures of sucrose fatty acid esters. Sucrose has eight hydroxyl groups available for esterification. The compounds of this invention comprise mixtures of sucrose molecules esterified with at least one and as many as eight fatty acids; preferred compound mixtures have four to eight hydroxyl groups esterified, although sucrose lower esters may comprise a minor component of the ester mixture in some embodiments. Thus, this invention comprises partially digestible mixtures of sucrose molecules to which are attached fatty acid residues in ester linkage to form physiologically compatible fat replacements for foods and pharmaceuticals. The mixture may contain sucrose mono- to octa-esters, preferably tetra to octa-esters. Chemical descriptions and formulae used here include isomeric variations.

The fatty acid residues may be the same or different, and may comprise a mixture of residues. The term "fatty acids" used here means organic fatty acids containing two to thirty carbons, more narrowly 10 to 23, and even more narrowly 12 to 20, and may be synthetic or natural, saturated or unsaturated, with straight or branched chains. Examples of fatty acids that can be used in this invention are acetic, propionic, butyric, caproic, caprylic, pelargonic, capric, lauric, undecanoic, myristic, palmitic, stearic, arachidic, behenic, oleic, linoleic, linolenic, eleostearic, and arachidonic acids. Mixtures of fatty acids may also be used, such as those obtained from non-hydrogenated or hydrogenated soybean, sunflower, peanut, safflower, olive, sesame, rice bran, canola, babassu, coconut, palm kernel, palm, cottonseed, or corn oil.

The partially digestible sucrose esters of this invention may be prepared by any known method. Generally speaking, the esters may be prepared by a transesterification reaction between fatty acid alkyl esters and sucrose in the presence of a catalyst (Feuge, R.O., et al., 47 *J. Amer. Oil Chem. Soc.* 56 (1970)) and in the presence or absence of a solvent (Rizzi, G.P., and Taylor, H.M., 55 *J. Amer. Oil Chem. Soc.* 398 (1978)). Polyesters are generally prepared by using an excess of fatty acid ester over the theoretical stoichoimetric amount required; partial esters, by using less than a stoichoimetric amount of fatty acid. One technique for preparing the esters of this invention is using an essentially stoichoimetric amount of fatty acid esters necessary to fully esterify the sucrose, and stopping the reaction before full esterification is achieved to obtain a partially digestible sucrose ester mixture.

Another technique for preparing partially digestible sucrose esters is introducing fatty acid moieties sequentially to afford an array of structures with well defined functional and isomeric characteristics. This logical molecular assembly process also allows for the use of natural or synthetic blends of acids and blends which may have significant levels of chain branching.

One advantage offered within the scope of the present invention is the ability to enable the construction of novel molecules and fat mimetics whose molecular weights, melting ranges, and viscosity properties may be engineered at the molecular level so as to fall within the same desirable ranges found for natural fats and oils and closely emulate the properties and the functionality of natural fats and oils used in food products. The simultaneous presence of sucrose esters having numbers of residues close to that found in natural triglyceride fat with sucrose esters having residues in excess of natural triglycerides offers a clear distinction over prior art structures which have been disclosed as potential low calorie oil and fat replacements. The present mixtures offer several distinct advantages over many of the prior art materials which have been claimed as fat and oil analogues.

The sucrose ester mixtures of this invention are partially digestible, providing from about 0.5 to 8.5, preferably 1.0 to 6.0 kcal/gram upon being metabolized. In one class of preferred compounds, the fatty acid residues attached to sucrose exhibit differential reactivity with respect to cleavage by digestive enzymes. This results not only in the controlled and limited availability of effective caloric value, but also the selective conversion of the fat mimetic to a product or intermediate with a less oil-like nature. The more readily digestible carboxylic acid residue can be a highly desirable essential acid or a nutritionally advantageous carboxylic acid such as oleic, linoleic, linolenic, or eicosapentaenoic acids, as well as low molecular weight carboxylic acids (e.g., acetic, propionic, or butyric acids) which would limit caloric delivery and provide additional ability to control functionality.

Alternatively, the more readily digestible residue can be a fatty acid with preventative or possible curative effects for certain diseases or conditions, such as, for example, a CLA, rearranged linoleic acid, of possible efficacy in the treatment of cancer. The product of such a controlled digestive process may be said to have decreased hydrophobicity, and correspondingly increased hydrophilicity, relative to its fat mimetic precursor. Such a product of a process of controlled digestion would tend to have not only decreased oilyness, but also increased ability to function as an emulsifier. Such a controlled digestion product will be less prone to exist in the GI tract as a persistent oil compared with substances taught in the prior art. Ideally, the enhanced emulsifying capacity of the enzymatic cleavage product derived from compositions of the invention would actually be an aid to digestion, substantially overcoming a major problem which has heretofor limited the widespread use and development of highly desirable low calorie synthetic fats and oils in foods and food preparation.

Some information about the relative absorbability of polyol esters is known. In a study comparing the relative hydrolysis of polyhydric alcohol oleate esters by a crude (bile juice) enzyme mixture containing pancreatic lipase, glycerol trioleate (hereinafter referred to as "triolein") was fully hydrolyzed; erythritol and pentaerythritol tetraoleates and adonitol pentaoleate were partially hydrolyzed; and sorbitol hexaoleate and sucrose octaoleate were not hydrolyzed (Mattson, F.H., and Volpenhein, R.A., 13 *J. Lipid Res.* 325 (1972)). The relative rates of hydrolysis were as follows (*ibid.*, p.327):

| oleate ester | micromoles oleic acid/min/ml |
|---|---|
| triolein | 2100 |
| erythritol tetraoleate | 1.9 |
| pentaerythritol tetraoleate | 1.1 |
| adonitol pentaoleate | 0.53 |
| sorbitol hexaoleate | 0 |
| sucrose octaoleate | 0 |

The same study yielded evidence that pancreatic lipase was not responsible for cleaving the tetra- and penta- esters. When pancreatic juice without bile was used as a source of enzymes, ester hydrolysis depended on the presence or absence of added sodium taurocholate. In the presence of sodium taurocholate, only those substrates that contained fewer than four ester groups were hydrolyzed. In the absence of sodium taurocholate, substrates that contained four and five ester groups were hydrolyzed. When purified pancreatic lipase was used to hydroyze the substrates, only triolein was hydrolyzed. The enzyme was unable to hydrolyze compounds containing more than three ester groups. The addition of sodium taurocholate completely blocked hydrolytic activity of the enzyme (ibid., p. 327).

The rate of lipase hydrolysis may be affected by the structure, as well as the numbers, of ester groups attached to polyhydric compounds. In a study comparing pancreatic lipase hydrolysis of different palmitate esters, glycerol tripalmitate was hydrolyzed half as much as olive oil, which is rich in oleic acid (Weiss, A., and Mieth, G., 27 *Die Nahrung* K13 (1983)). Sucrose octapalmitate was not hydrolyzed; triglycerol pentapalmitate and tetraglycerol hexapalmitate were hydrolyzed very slightly, both on the order of 1% that of olive oil; but diglycerol tetrapalmitate was about 20% that of olive oil (*ibid.* in Table 1 on K-14). The difference between the apparent lipase reactivities of erythritol tetraoleate and diglycerol tetrapalmitate may be due to differences in ester structures, or substituents, or both. However, Minich, *supra*, found pentaerythritol tetracaprylate impervious to lipase (U.S. Pat. No. 2,902,419, col. 4, lines 66 to 71). Caprylate is half the length of palmitate, but both are saturated. If analogous substituents in these assays, the structure of the ester backbone may play a significant role in substrate specificity, casting some doubts on the conclusions drawn by simply counting substituents on dissimilar polyols (reported by Mattson and Volpenhein, *supra*).

Evidence that a nonspecific lipase may cleave compounds containing more than three ester groups was obtained in another study using erythritol tetraoleate as a substrate (Mattson. F.H., and Volpenhein, R.A., 13 *J. Lipid Res.* 777 (1972)). The nonspecific lipase described completely hydrolyzed erythritol tetraoleate to free erythritol in a stepwise manner. Hydrolysis by the nonspecific lipase increased with increasing sodium taurocholate ("Olestra As A Calorie Free Substitute for Fats and Oils," Procter and Gamble Food and Drug Administration Food Additive Petition 7A3997 (1987) (hereinafter referred to a "PG PA Petition"), Appendix EA-6, vol. 4, p. 876).

Balance and tracer studies using analogous polyhydric alcohol oleate esters further elucidated the metabolic fate of compounds containing more than three esterified hydroxyl groups. A balance study showed pentaerythritol tetraoleate, xylitol pentaoleate, sorbitol hexaoleate and sucrose octaolete progressively less well absorbed than triolein (with percent absorptions 90%, 88%, 78%, and 70%, respectively, compared with 96% for triolein, Mattson, F.H., and Nolen, G.A., 102 *J. Nutr.* 1171, 1173 (1972)).

Similarly, a mixture of 43% octa-, 43% hepta-, and 14% penta- sucrose polyesters was absorbed 4.5%, or 7.5% with added hydrogenated palm oil, compared with 92.5% for a soybean oil control (PG FA Petition, Appendix EA-9, vol. 4, p. 911). In a balance study by another group of investigators, rats fed a sucrose polyester preparation that had an average of 6.5 ester groups per molecule excreted only 60 to 70% of the ingested polyesters (Aust, L., et al., 25 *Ann. Nutr. Metab.* 255 (1981)).

These results agree with a tracer study of rats fed esters with radioactively labelled oleate residues (Mattson, F.H., and Volpenhein, R.A., 102 *J. Nutr.* 1177 (1972)). The tagged oleic acid was recovered in the thoracic duct lymph, and the relative rates of absorption of the different esters were compared. Triolein oleic acids entered the lymph rapidly; oleic acids fed as erythritol tetraoleate appeared more slowly and did not attain maximum relative activity for 12 hours; oleic acid fed as xylitol pentaoleate entered the lymph even more slowly, and, like erythritol tetraoleate, did not achieve maximum relative activity until 12 hours after feeding. The cumulative recoveries over a 24-hour period were also compared. During that interval, 12% of the fed triolein was not absorbed, 33% of the erythritol tetraoleate, 76% of the xylitol pentaoleate and 98% of sucrose octaoleate was not absorbed.

It is an advantage of this invention that ingestion of sucrose not fully esterified provides a significant reduction in calories while alleviating, to at least some degree, the problems associated with the ingestion of fully esterified sucrose, namely, foreign body responses in the GI tract and anal leakage. Sucrose partial esters containing four and five ester groups, if analogous to erythritol and xylitol, are resistant to pancreatic lipase, yet appear to be partially digestible, since they are probably cleaved by a nonspecific lipase. The higher esters are not, and pass out of the body unchanged. While not wishing to be bound to any theory, the differential reactivity of these polyol esters may help explain the desirable partially digestible properties of the ester mixtures of this invention.

The following is a representative complement of esters that can make up a partially digestible, physiologically compatible sucrose oleate ester mixture in accordance with the present invention:

| ester | range (%) |
|---|---|
| tetraoleate | 0-25 |
| pentaoleate | 5-50 |
| hexaoleate | 5-50 |
| heptaoleate | 5-75 |
| octaoleate | 0-75 |

The total of the tetra-, penta- and hexaoleates is desirably within the range of from 10 to 75 weight percent, more narrowly, from 20 to 60, for example 35 to 50 percent. Viewing this from another perspective, it is advantageous to include at least 20 weight percent tetra- and pentaoleates. Significant levels of lower esters, e.g., mono-, di-, and triesters, are not preferred, and can be maintained below 5 weight percent, preferably less than 2 weight percent.

The representative complement of esters in this illustration does not imply that the partially digestible esters of this invention need exhibit a spectrum of esters differing incrementally in the degree of substitution. As the figures show, the esters may have tetra- to octa-, penta- to hepta-, penta- to octa-, and the like ester mixtures. However, this invention may also comprise mixtures of esters having widely differing degrees of substitution, i.e., tetra- and octa, or tetra- and penta-, or penta- and octa- esters. Further, the esters may differ not only in the degree of esterification, i.e., in numbers of substituents, but also in structures of substituents, forming mixed esters. The latter may be mixtures of homologous fatty acid esters, oleates, stearates, and palmitates, for example, or mixed esters having different fatty acid substituents linked to the same sucrose molecules. Thus, the esters of this invention may comprise products having widely divergent properties.

The following example is presented to further illustrate and explain the present invention and should not be taken as limiting in any regard. Unless otherwise indicated, all parts and percentages are by weight, and are based on the weight at the particular stage of the processing being described.

## EXAMPLE

In this example, a reduced calorie margarine may be prepared using partially digestible sucrose esters.

An oil phase is prepared by blending:

(1) a hardstock comprising 40.1% a soybean oil blend (35 parts liquid and 65 partially hydrogenated), which has the following SFI (solid fat index) profile:

25 to 28 at 50° F.

15 to 17.5 at 70° F.

1.5 to 3.0 at 92° F.,

(2) a liquid component comprising 40.0% a 99% pure sucrose oleate ester blend having the following ester composition:

10% tetraoleate

10% pentaoleate

15% hexaoleate

30% heptaoleate

35% octaoleate,

with 0.09% lecithin,

0.10% mono and diglycerides,

0.007% vitamin and color mixture, and

0.003% flavor.

An aqueous phase is prepared by blending:

16.0% water,

1.6% whey,

2.0% salt,

0.09% sodium benzoate, and

0.003% water soluble flavor.

The phases are emulsified into each other, cooled, and fed through a scraped-surface heat exchanger in the usual manner.

The above description is for the purpose of teaching the person of ordinary skill in the art how to practice the present invention, and it is not intended to detail all those obvious modifications and variations of it which will become apparent to the skilled worker upon reading the description. It is intended, however, that all such obvious modifications and variations be included within the scope of the present invention, which is defined by the following claims.

**Claims**

1. An edible food composition comprising a partially digestible mixture of sucrose fatty acid esters.

2. The composition according to claim 2 wherein the fatty acid esters comprise $C_2$ to $C_{30}$ fatty acid esters.

3. The composition of claim 2 further comprising $C_{10}$ to $C_{23}$ fatty acid esters.

4. The composition according to claim 1 wherein said fatty acid esters are selected from acetic, propionic, butyric, caproic, caprylic, pelargonic, capric, lauric, undecanoic, myristic, palmitic, stearic, arachidic, behenic, oleic, linoleic, linolenic, eleostearic, and arachidonic acid esters, and mixtures thereof.

5. The composition according to claim 1 wherein said fatty acid esters are selected from those obtained from non-hydrogenated or hydrogenated soybean, sunflower, peanut, safflower, olive, sesame, rice bran, canola, babassu, coconut, palm kernel, palm, cottonseed, and corn oil fatty acid residue esters.

6. The composition according to any preceding claim wherein the sucrose esters provide from 0.5 to 8.5 kcal/gram.

7. The composition according to claim 6 wherein the sucrose esters provide from 1.0 to 6.0 kcal/gram.

8. The composition according to any preceding claim wherein said mixture comprises a complement of 0 to 25% tetra-, 5 to 50% penta-, 5 to 50% hexa-, 5 to 75% hepta-, and 0 to 75% octa-substituted esters.

9. The composition according to claim 8 wherein the total of tetra-, penta- and hexa-substituted esters is in the range from 10 to 75%.

10. The composition according to claim 9 further comprising a total of from 20 to 60%.

11. The composition according to claim 10 further comprising a total of from 35 to 50%.

12. The composition according to claim 8 wherein said sucrose fatty acid esters are sucrose oleates.

13. A method of providing a reduced calorie food product, in which the digestible fat ingredient is at least partially replaced by a partially digestible sucrose fatty acid ester mixture.

14. The method of claim 13 wherein said fatty acid ester mixture comprises mono- to octa- esters.

15. The method of claim 14 further comprising tetra- to octa-esters.

16. The method of claim 15 further comprising 0 to 25% tetra-, 5 to 50% penta-, 5 to 50% hexa-, 5 to 75% hepta-, and 0 to 75% octa-esters.

17. The method of claim 16 wherein the total of tetra-, penta-, and hexa-esters is in the range from 10 to 75%.

18. The method of any one of claims 13-17 wherein said fatty acid esters comprise $C_{10}$ to $C_{23}$ fatty acid esters.

19. The method of any one of claims 13-17 wherein said fatty acid esters sre selected from butyric, caproic, caprylic, pelargonic, capric, lauric, undecanoic, myristic, palmitic, stearic, arachidic, behenic, oleic, linoleic, linolenic, eleostearic, and arachidonic acid esters, and mixtures thereof.

20. The method according to any one of claims 13-17 wherein said fatty acid esters are selected from those obtained from non-hydrogenated or hydrogenated soybean, sunflower, peanut, safflower, olive, sesame, rice bran, canola, babassu, coconut, palm kernel, palm, cottonseed, and corn oil fatty acid residue esters.

21. The method according to any one of claims 13-17 wherein said sucrose esters provide from 0.5 to 8.5 kcal/gram.

22. In a food composition, an improvement wherein at least a portion of the digestible fat ingredient is replaced by a mixture of partially digestible sucrose fatty acid esters.

23. The improvement of claim 22 wherein said mixture comprises mono- to octa- esters.

24. The improvement of claim 23 further comprising tetra- to octa- esters.

25. The improvement of any one of claims 22-24 wherein said fatty esters comprise $C_2$ to $C_{30}$ fatty acid residues.

26. The improvement of any one of claims 22-25 wherein said food composition is a margarine.